Europäisches Patentamt

European Patent Office

Office européen des brevets

(19)

(11) **EP 0 749 245 A2**

(12) **EUROPEAN PATENT APPLICATION**

(43) Date of publication:
18.12.1996 Bulletin 1996/51

(51) Int. Cl.⁶: **H04N 7/26**

(21) Application number: **96109161.8**

(22) Date of filing: **07.06.1996**

(84) Designated Contracting States:
**DE ES FR GB NL**

(30) Priority: **12.06.1995 IT MI951241**

(71) Applicants:
• **ALCATEL ITALIA S.p.A.**
**I-20158 Milano (IT)**
Designated Contracting States:
**DE FR GB**

• **ALCATEL N.V.**
**NL-2288 BH Rijswijk (NL)**
Designated Contracting States:
**ES NL**

(72) Inventor: **Sannino, Roberto**
**20100 Milano (IT)**

(74) Representative: **Pohl, Herbert, Dipl.-Ing et al**
**Alcatel Alsthom**
**Intellectual Property Department,**
**Postfach 30 09 29**
**70449 Stuttgart (DE)**

(54) **Method and equipment for coding and decoding a digital image**

(57) The invention relates to fixed or sequenced image processing and more particularly to a method and to the equipment for coding and decoding a digital image through vector quantization based upon fractal concepts.

Through the invented method it is possible to reconstruct the original image without any iteration. This is feasible since the coding does not start from any image but from one known to the decoder and hence having a shorter distance from the original image than any other image.

Fig. 1

EP 0 749 245 A2

## Description

The present invention relates to the processing of fixed or sequenced images and more particularly to a method and to an equipment for coding and decoding a digital image through vector quantization based on fractal concepts.

Normally when a big data amount, as in the case of a digital image, has to be stored, a remarkable amount of memory is required and, in the circumstance in which it has to be transmitted, the availability of a broadband and fast transmissive means is indispensable.

Therefore, it is convenient to compress such data at the maximum extent possible.

Several compression techniques with more or less good performances are known.

A technique which recently has been resulting to be effective for high compression ratios is the one using the concept deriving from fractal mathematics.

Fractal images visually have a very complex structure, still being mathematically describable through very simple recursive formulas. In fact, such images are characterized in that every of their details is derivable by operating a transform, which may include a shift of dimensions, translations, rotation and symmetries, on the image itself or part thereof.

It is now profusely shown in the literature how the images of the real world can be approximated by fractal images with a certain fidelity. This fact is exploited by the so-called ,image fractal compression techniques. By using such techniques, the compression of a digital image is obtained by finding the fractal image that approximates the original image with the highest fidelity and then by coding the recursive mathematical formulas, describing such fractal image, as sequences of binary digits. In so doing a distortion is introduced in the original image, since what is coded is an approximation of the image itself, but a very high compression ratio is typically realized, this meaning that the number of bits necessary for the description of the simple recursive mathematical formulas is much lower than the number of bits required by a coding without distortion of the original image itself.

A very good example of such technique is disclosed in the PCT patent application No. WO 91/00666 where the fractal compression of images was introduced for the first time.

The image is coded through a continuous comparison process between the blocks of the image and the blocks of a decimated or contracted version thereof; the blocks are put into relation each other with the help of a fractal transformation; the image is then represented through equations describing the transformation.

The decoding occurs in an iterative fashion: the transformation equations representing the image are applied to any image, normally to a grey image; then, by iteration, they are again applied to the image resulting from the transformation and so on.

At every new iteration, the reconstructed image is more and more similar to the coded fractal image. Since such fractal image is invariant with respect to the transformation, after a number of iterations the reconstructed image itself becomes stable, i.e. it tends to be no longer altered by the subsequent iterations. At this point the reconstruction process can be ended. To be noted that even if a countless number of iterations would be necessary in theory, in practice ten iterations are typically sufficient for ensuring a satisfactory quality of the reconstructed image, since the levels of grey of digital images are represented in a discrete form.

It is an object of the present invention to provide a technique capable of reducing the computational load of the known technique.

Another object of the present invention is to increase the reconstruction rate of the image.

Still another object of the present invention is to improve the quality of the image at parity of the number of bits used in the representation.

These and other objects of the present invention are reached by the method set forth in claim 1 and by the equipment as set forth in claim 7.

Further advantageous aspects of the present invention are set forth in the dependent claims.

Through the method as disclosed herein it is possible to reconstruct the original image without any iteration. This is feasible since the coding does not start from any image but from one already known to the coder, and hence having a shorter distance from the original image than any other image.

The compression technique as disclosed herein is applicable firstly to the moving image sequences, typically, but not only, television images, where images adjacent in time tend to be similar each other. Now, when an image is coded with sufficient accuracy, information can be extracted therefrom usable in the description, or coding, of images either subsequent or preceding, in such a way as to reduce the amount of information necessary to the coding of the last ones. It is applicable also in coding fixed images, when a first rough approximation of the image itself is known because already described through other methods, any, and the image is wished to be described in greater detail.

Also in this case a redundancy of information exists between the image described roughly and the one described in detail. Such redundancy, if suitably exploited, can minimize the additional information necessary for reconstructing the more finely detailed image.

The encoder knows the exact value of the noise introduced while executing the coding. On the contrary, in the known art it is necessary to carry out the decoding, along with all the required iterations, in order to know the noise itself.

By knowing it in coding allows the making of choices capable of minimizing the noise with greater effectiveness.

The great advantage obtainable with the method as disclosed herein is to carry out a decoding without iterating several times the operations of transformation. With one operation only an image quality comparable with the original one is obtained.

The above-mentioned and other objects and characteristics of the invention will become more apparent and the invention itself will be better understood with reference to the following description of an embodiment thereof taken in conjunction with the attached drawings wherein:

- Fig. 1 is the flow chart relative to the coding method according to the invention, and
- Fig. 2 is the flow chart relative to the decoding method according to the invention.

In the following a digital image I will be represented generally as a matrix of pixels, i.e. integers, having L rows and C columns. Usually the term "pixel" indicates the smallest luminous element (dot) which a digital image is composed of.

The pixel at row y and column x will be denoted by I(y,x).

Image I is suodivided into a number Nr of blocks, called Range blocks, having whatever form and dimension, but such as to cover all the image, i.e. such that every pixel of I belongs to at least one of them.

The choice of the form can be any provided that the requirement of every pixel of the image belonging to at least one block is met.

The choice of the dimension is the result of a compromise between the minimization of the bits required by the coding (the entire image can be coded with a small number of large blocks) and viceversa more accurate description of the details of the image.

In order to adapt such compromise to the local characteristics of the image, the dimensions of the blocks can be varied within one image itself.

In the following the term "distance" indicates a mathematical function allowing the numerical estimation of the resemblance of the two images. Typical examples of the distance measurement are the following:

$$D1 = \Sigma \, | \, b1(x,y) - b2(x,y) | \; or$$

$$D2 = \Sigma \, (b1(x,y) - b2(x,y))^2$$

where b1 (x,y) and b2(x,y) represent the pixels of two generic blocks, D1 the distance in norm Ll and D2 the distance in norm L2.

An image ID is calculated from the image I by decimation.

Decimation is a reduction process of the number of pixels such as to alter as little as possible the visual characteristics of an image. The decimation process generates, therefore, a reduced digital image but such as to maintain anyway the features of the starting image.

For instance, ID has its dimensions (L/2 x C/2), and every pixel of it is calculated with the following formula:

$$ID(x,y) = [I(2y,2x)+I(2y,2x+1)+I(2y+1,2x)+I(2y+1,2x+1)]/4 \qquad (1)$$

i.e. as average value of the four adjacent pixels.

For every Range block, the portion the most similar to Range block, called also Domain block, is searched in the image ID, i.e. the parameters of the transformation must be calculated in such a way as to minimize the distance of this portion from Range block. Such a portion has the same dimension as Range block.

The transformation according to a preferred embodiment of the present invention is of the type as described by the following formula:

$$Dr = a*I(k,D)+B(c) \qquad (2)$$

in which the following symbols are used:

- Dr        block resulting from the transformation
- a         multiplication factor
- I(k,D)    isometry function, where D represents the portion which the transformation is applied to, and k selects one of the possible isometrics.
- B(c)      block having the same dimension of Range block but having all pixels of the same value c.

In order to have the process operating correctly, the multiplication factor "a" must be comprised between -l and 1.

The isometry function I(k,D) transforms block D according to four rotations and two symmetries, i.e. the identity block, reflection with respect to the vertical axis of symmetry and to the horizontal one, reflection with respect to the main diagonal and to the secondary one, + 90 degrees, -90 degrees, and + 180 degrees rotation with respect to the centre. Parameter k selects the type of transformation.

Therefore, the parameters of the transformation that represents every images will be, block by block, the following:

- position and dimension of Range block in the image I,
- position of Domain block in the image ID,
- approximate (quantized) value of parameter a,
- approximate (quantized) value of parameter c,
- value of parameter k (integer comprised between 0 and 7).

The decoding of the above information will be carried out as follows.

The decoding of fractal images occurs by repeating a number of the transformation that represents time the same succession of operations. For this reason it is spoken of iterative decoding, and the succession of operations which is repeated is called individual iteration.

Every decoding iteration can be thought as a block that receives an image at its input, processes it and outputs the processed image. The image resulting from an individual iteration constitutes the input of the next iteration.

The succession of operations forming an individual iteration is exactly described in the encoding parameters.

When, as in fractal encoders, these operations fulfil certain mathematical constraints, for instance the absolute value of the multiplication factor a must be less than 1, it happens that at each new iteration the outgoing image and the incoming one are more and more similar or, in other words, that the decoding process converges.

Although countless iterations are theoretically necessary to have a perfect convergence (outgoing image equal to image to be reconstructed), the decoding process can be stopped when the difference between outgoing image and incoming image is negligible. To be noted that the first iteration uses any image as an input, normally a completely grey image, and applies a number of iterations (from 5 to 10) thereto.

The operations carried out at each individual iteration are the following.

The grey starting image is decimated according to formula (1), and every Range block of the image to be reconstructed is calculated by taking the corresponding Domain block in the decimated image and applying formula (2) thereto, whose parameters are known being defined by the coder.

The basic idea of the invention is general, i.e. it can be adapted to any fractal encoding scheme both in case of sequential coding of correlated images, and sequences of moving images, or several coding of the same image at different levels of definition of the details.

Consider two similar images $I_{(n-1)}$ and $I_{(n)}$, in particular $I_{(n)}$ is to be coded and $I_{(n-1)}$ is already coded and reconstructed. The modification made to the encoding process in accordance with the invention is that the decimated image ID is calculated starting from the image $I_{(n-1)}$ coded previously instead of the actual image $I_{(n)}$. A justification of this procedure can be found in what has been said at the outset as to the resemblance or correlation, between images in sequence or at different levels of detail. In particular it is assumed that the set of Domain blocks deriving from two similar images are, in turn, similar.

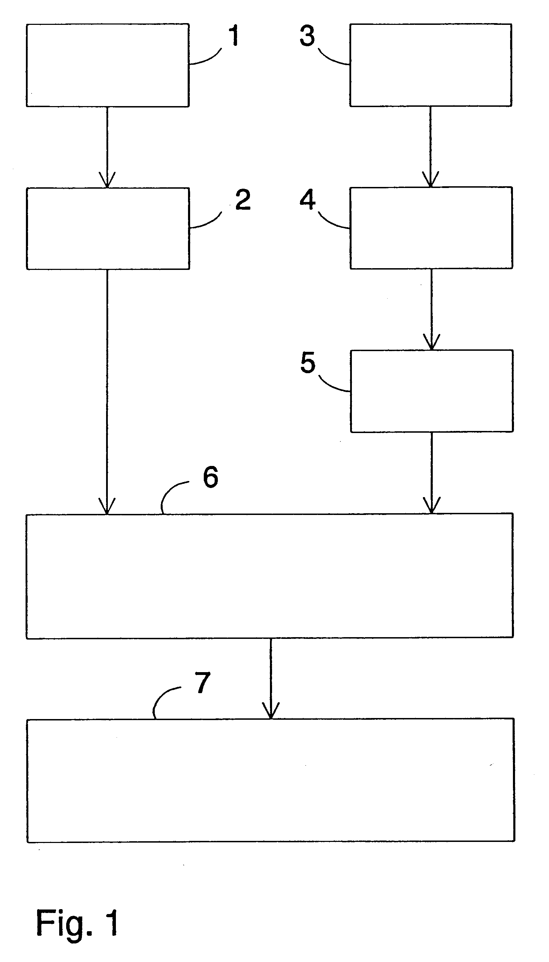

Referring to the flow chart of Fig. 1 the encoding operations in accordance with the invention are summarized below.

The actual (to be coded) image 1 is subdivided 2 into blocks. The image 3 coded previously is decimated 4 and then subdivided 5 into portions. For each pair block/portion the parameters of the transformation are then calculated 6 and those relative to the pair block/portion with a minimal distance are chosen and coded.

The image reconstruction, in decoding, at this point is no longer iterative; it occurs by reconstructing one time only all the Range blocks of the image coded by Domain blocks of the image decimated previously. As a result, factor "a" of formula (2) is no longer to be subjected to any limitation, any form of convergence in the decoding being not necessary.

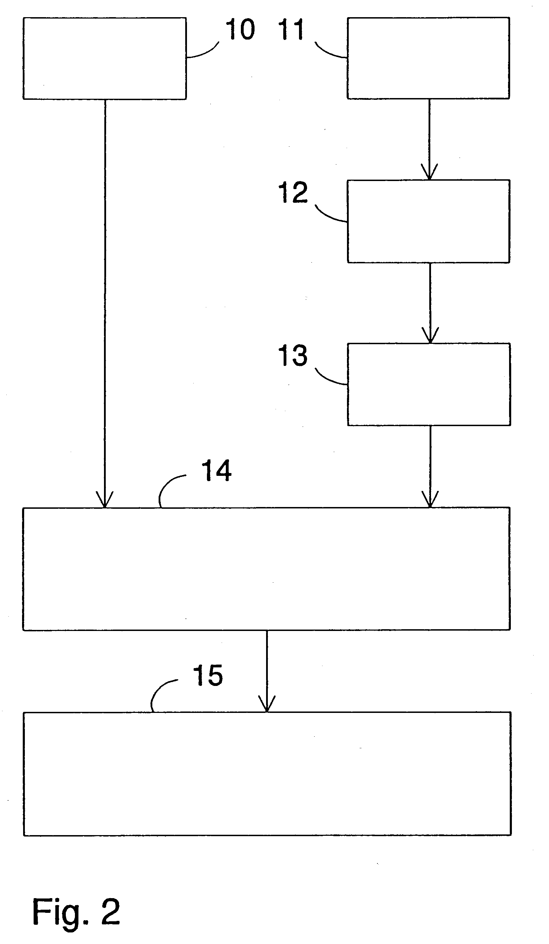

Referring to the flow chart of Fig. 2 the decoding operations in accordance with the invention are summarized below.

The parameters of the transformation are decoded 10. The image 11 coded previously is decimated 12 and then subdivided 13 into portions. The transformation is applied 14 to each portion to reconstruct the originary image 15.

According to the present invention the operation is then also possible with values of a having absolute value greater than 1, without any limitation. Good performances have been obtained with values comprised between -10 and +10.

Through this method the problems emphasized previously are solved as follows; the image reconstruction occurs by only one iteration and the decoder has the direct control of the introduced noise.

As a result, this system offers higher performances than the known fractal encoders, also in terms of reduction of the noise introduced by the coding.

A generalization of the invention consists in using, when searching the best Domain block, both the images similar to the one $I_{(n)}$ subjected to coding, like, e.g., those images coded previously, and the image $I_{(n)}$ itself. In other words, for each block a choice can be made whether to use the new method or another fractal encoding method. The decoder then reconstruct the entire image in an iterative manner, like in the prior art fractal decoders, with the sole difference that those blocks coded with the new method are completely reconstructed already at the first iteration. These blocks are left equal to themselves during the successive iterations.

In this circumstance the decoding tends to converge with a lower estimates the encoding number of iterations, and the decoder estimates the encoding error with a better approximation.

Moreover, there is the advantage of a better quality of the reconstructed image, since the search of the better Domain block occurs in a larger and more appropriate set of blocks.

The method as set forth herein can be implemented in a manner well known to those skilled in the art through common digital signal processing (DSP) techniques and therefore it will not be described in detail.

While the invention has been described referring to a specific embodiment thereof, it should be noted that the invention is not to be construed as limited in the illustrated embodiment being susceptible to several modifications and variations which will be apparent to those skilled in the art and should be understood as falling within the scope of the accompanying claims.

## Claims

1. Method of coding and decoding a digital image in which said coding includes the steps of:

   - suodividing said image into adjacent and not overlapping blocks having suitable dimensions,
   - decimating a first predetermined image,
   - suodividing said first predetermined and decimated image into portions having the same dimensions as said blocks,
   - calculating the parameters of a transformation between each of said blocks and each of said portions,
   - coding, for each of said blocks, those of said parameters relative to the one of said portions which, once transformed, has a minimum distance,

   and in which said decoding comprises the steps of:

   - decimating a second predetermined image,
   - suodividing said second predetermined and decimated image into portions having the same dimensions as said blocks,
   - reconstructing each block of said digital image by applying said parameters to each portion of said second predetermined and decimated image, said method being characterized in that said first and second predetermined images are the same image.

2. Method according to claim 1, characterized in that said first or second predetermined image is a lower resolution image with respect to said digital image.

3. Method according to the preceding claims, characterized in that said digital image is part of a sequence of television images.

4. Method according to claim 3, characterized in that said first or second predetermined image is a previously encoded image.

5. Method according to claim 3, characterized in that said first or second predetermined image is a combination of the images encoded previously.

6. Method according to claim 1, characterized in that said blocks have variable dimensions.

7. Equipment for coding and decoding a digital image in which the coding section includes:

   - means for suodividing said image into adjacent and not overlapping blocks having suitable dimensions,
   - means for decimating a first predetermined image,
   - means for subdividing said first predetermined and decimated image into portions having the same dimensions as said blocks,
   - means for calculating the parameters of a transformation between each of said blocks and each of said portions,
   - means for coding, for each of said blocks, those of said parameters relative to the one of said portions which, once transformed, has a minimum distance,

and in which the decoding section includes:

- means for decimating a second predetermined image,
- means for subdividing said second predetermined and decimated image into portions having the same dimensions as said blocks,
- means for reconstructing each block of said digital image by applying said parameters to each portion of said second predetermined and decimated image, said equipment being characterized in that said decimating means in the coding section and said decimating means in the decoding section receive at their inputs the same image.

Fig. 1

Fig. 2